# EUROPEAN PATENT SPECIFICATION

(11) **EP 1 294 632 B1**
(45) Date of publication and mention of the grant of the patent: **27.07.2005**
(21) Application number: 01934025.6
(22) Date of filing: 08.05.2001
(51) Int. Cl.: B66D 5/08, F16D 59/02, B60T 13/04, B66B 11/08

(54) **HOLDING BRAKE FOR AN ELEVATOR**
HALTEBREMSE FÜR EINEN AUFZUG
FREIN D'ARRET D'ASCENSEUR

(30) Priority: 11.05.2000 FI 20001125
(43) Date of publication of application: 26.03.2003
(73) Proprietor: Kone Corporation, 00330 Helsinki (FI)
(72) Inventor: MUSTALAHTI, Jorma, FIN-05620 Hyvinkää (FI)
(74) Representative: Habersack, Hans-Jürgen, Dipl.-Ing.
(86) International application number: PCT/FI2001/000441
(87) International publication number: WO 2001/085593

(56) References cited:
- DE-A- 19 807 654
- US-A- 5 014 828
- US-A- 5 244 060
- PATENT ABSTRACTS OF JAPAN vol. 015, no. 146 (M-1102), 12 April 1991 (1991-04-12) & JP 03 023186 A (MITSUBISHI ELECTRIC CORP), 31 January 1991 (1991-01-31)
- DATABASE WPI Section PQ, Week 199707 Derwent Publications Ltd., London, GB; Class Q38, AN 1997-075887 XP002901864 & RU 2 060 228 C (LUGAN MACH CONS INST), 20 May 1996 (1996-05-20)

## Description

The present invention relates to a holding brake for an elevator, as defined in the preamble of claim 1. Moreover, the invention relates to the use of a hydraulic release device as mentioned in claim 9.

The function of the holding brake of an elevator is to keep the elevator car immovable at a floor and to stop the car when necessary, e.g. in the event of a power failure. Therefore, the braking action is based on the use of a mechanical compressing element, such as a spring, which keeps the brake in position when it is not subject to the action of any external forces. Considering elevator passengers, the operation of the brake of the elevator must be as fast, accurate and noiseless as possible. Therefore, the air gap between the brake pad of the holding brake and the braking surface of the traction sheave or a separate brake wheel must be as small as possible. Thus, the braking action is fast and the impact energy of the brake shoe remains low while the braking noise is minimized.

The braking force of the holding brake, i.e. the compressive force of the spring used in it has to be relatively large to allow optimal operation of the brake. The impact of the brake shoe against the braking surface generally tends to produce some kind of noise or vibration. Also, when the mechanical spring is compressed at release of the brake, a noise is produced as a result of the impact between the brake body and the movable frame. There is good reason to continue efforts towards developing different solutions for damping the above-mentioned kinds of impact noise.

Finnish patent application no. FI 982788 proposes an idea of damping the noise produced by the operation of the holding brake by the use of a separate damping element made of an elastic material, placed between the movable frame and the brake body.

The object of the present invention is to achieve a new type of holding brake. A specific object is to disclose a structure in which a hydraulic brake releasing system is utilized for damping the movements of the brake and the noise produced by it. The holding brake of the invention comprises a hydraulic circuit which resists the motion of the movable frame.

The RU 2060228C discloses the brake of a lifting equipment comprising a brake release device which is based on a liquid circuit for deactivating the brake action.

US 5,014,828 discloses an electromagnetic brake with the jaws being biased in the braking position via a spring. The release device comprises an electromagnet and a hydraulic dampening device which offers resistance to the movement of the armature relative to the electromagnet so as to control and slow down the speed at which the brake supplied and released. The dumping device is integrated inside the assembly consisting of the armature and the electromagnet.

As for the features characteristic of the invention, reference is made to the claims.

As compared with previous solutions, the invention has the advantage of low manufacturing costs as it combines a brake releasing device and a damper in the same physical device. Another advantage is that the structure of the brake system can be implemented in various ways. A further advantage is that the same apparatus is used to effect damping both in the releasing direction and in the closing direction. The movements of the movable frame during braking are small, and the apparatus of the invention produces an accurate braking action without a delay. The apparatus of the invention also makes it possible to avoid malfunctions produced by backlash. One of the advantages is also the fact that the brake releasing device and the brake damper share the same fluid supply. The structure of the invention is preferably implemented by integrating certain parts of the hydraulic circuit in the piston. On the other hand, the components of the hydraulic circuit will be more easily accessible for servicing and maintenance when placed in separation from the brake body. A further advantage of the invention is that it uses a tank circuit in conjunction with the hydraulic circuit to eliminate leakages and wear of gaskets. The tank circuit is preferably so constructed that it shares with the hydraulic circuit the same fluid pipe leading to a release pump, thus obviating the need for a separate pipe to connect the tank circuit to the release pump.

In the following, the invention will be described in detail by referring to the attached drawings, which present a holding brake for an elevator according to the invention.
Fig. 1 presents a general view of a traction sheave elevator.
Fig. 2 presents a partially sectioned holding brake of an elevator, with a brake releasing cylinder and a damping hydraulic circuit and a tank circuit integrated with it.
Fig. 3 presents a somewhat different implementation of the apparatus presented in Fig. 2, with certain parts of the hydraulic circuit machined in the piston.

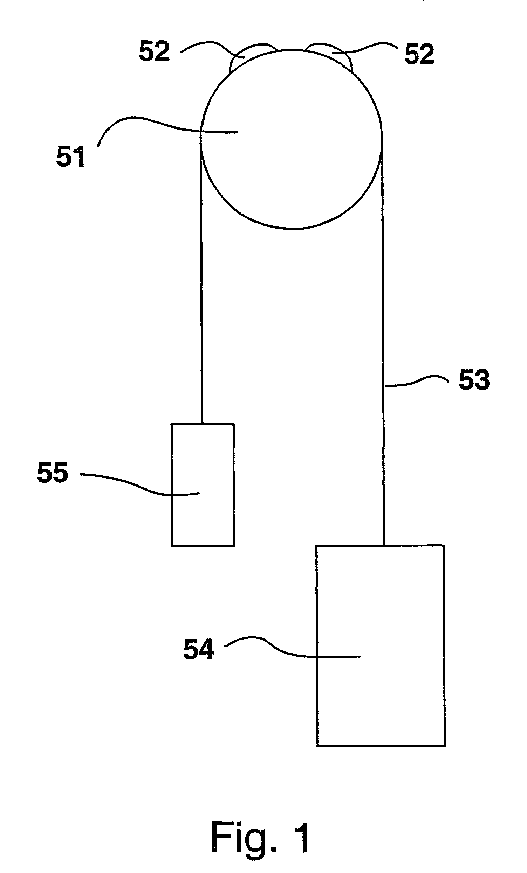

Fig. 1 presents a traction sheave 51 provided with a motor and transmitting a force via ropes 53 to an elevator car 54 and a counterweight 55. Placed against the braking surface of the traction sheave are two holding brakes 52. The figure visualizes the placement and operation of the holding brake.

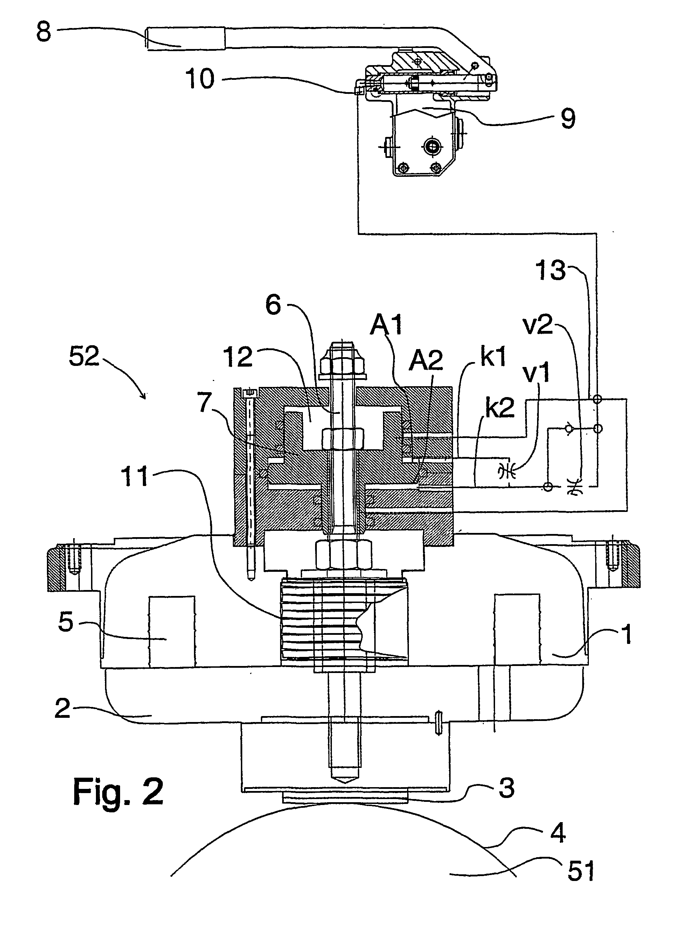

The holding brake 52 presented in Fig. 2 comprises a brake body 1 with a movable frame 2 movably mounted in it. A brake pad 3 engaging the braking surface 4 of the traction sheave 51 is attached to the outer surface of the movable frame. The brake body houses an electromagnet 5 exerting a force of attraction between the brake body 1 and the movable frame 2. Fixed to the movable frame 2 is a lifting element, such as a lifting arbor 6. Placed between the brake body 1 and the movable frame 2 is a compression means, such as a mechanical spring 11, composed of e.g. disc springs, serving to move the movable frame 2 away from the brake body 1 and to press the brake pad 3 against the braking surface 4. Built in conjunction with the holding brake 52 is a brake releasing unit, which comprises a piston 7 attached to the lifting arbor 6 and serving to produce a hydraulic pressure to force a fluid from a brake release cylinder 12 into ducts k1 and k2 comprised in a separate hydraulic circuit resisting the motion of the movable frame 2. The ducts k1 and k2 communicate with chokers v1 and v2, which damp the fluid flow and therefore the impact noise produced by the braking action. The hydraulic circuit comprises a mechanical release device 8, by the operation of which the brake fluid is caused to flow from the tank 9 of the release device via a release pump 10 into spaces above and below the piston 7, said spaces being partially defined by unequal areas A1 and A2 above and below the piston. Connected to the hydraulic circuit is a tank circuit 13 to prevent fluid leakage from the brake releasing cylinder 12 and to prevent wear of the gaskets.

By using a damping hydraulic circuit, it is possible to combine a brake releaser and a damper in the same device. When the brake is being released mechanically e.g. during a power failure, the electromagnet 5 being inoperative, the fluid pressure.is passed from the container 9 of the release device 8 via the ducts k1 and k2 into the spaces on either side of the piston 7. The brake is released as the piston 7 is pushed upward by the pressure developed in consequence of the difference between the areas of the upper and lower sides of the piston 7. When the brake is being released using the brake releasing device, the pressure above the piston 7 tends to increase in consequence of the movement of the piston 7 because pressure balancing in the system is retarded by the gasket between the upper and lower sides of the piston and by the choker v1. The sealing of the spaces above and below the piston 7 toward the tank circuit 13 may leak considerably. In this case, an amount of fluid is forced to flow past the gasket around the upper part of the piston into the tank circuit 13, with the result that the pressure is equalized and the releasing delay is significantly shortened.

When the brake is released by means of the electromagnet 5, the latter attracts the movable frame 2 and the brake body 1 toward each other, with the result that the brake pad 3 starts moving upward while at the same time the upper side of the piston 7 is forcing some fluid into duct k1, where the flow is damped by choker v1, and therefore the impact noise produced as the movable frame 2 and the brake body 1 hit against each other is damped while the kinetic energy is converted into thermal energy. The fluid coming from the upper side of the piston 7 circulates to the lower side of the piston 7, but, since the area A2 on the lower side is larger than the area A1 on the upper side, an amount of fluid from the container 9 of the release pump 10 flows in to make up the deficit. As the brake is released, the fluid coming from the release pump 10 flows past choker v2. When the brake is closed, the action of the electromagnet 5 ceases and the mechanical spring 11 of the brake presses the movable frame 2 and the brake pad 3 attached to it downward toward the braking surface 4. At the same time, the piston 7 forces an amount of fluid from below into duct k2, from where it flows via choker v1 to the upper side of the piston 7, damping the impact noise produced as the brake pad 3 hits against the traction sheave 51. After that, due to the difference between the areas A1 and A2 of the upper and lower sides of the piston, the fluid flows via choker v2 back into the container 9 of the release device 8. The fluid leaking past the gasket in the lower part of the piston 7 flows into the tank circuit 13, so it will not harm the brake system below or cause wear of the other gaskets.

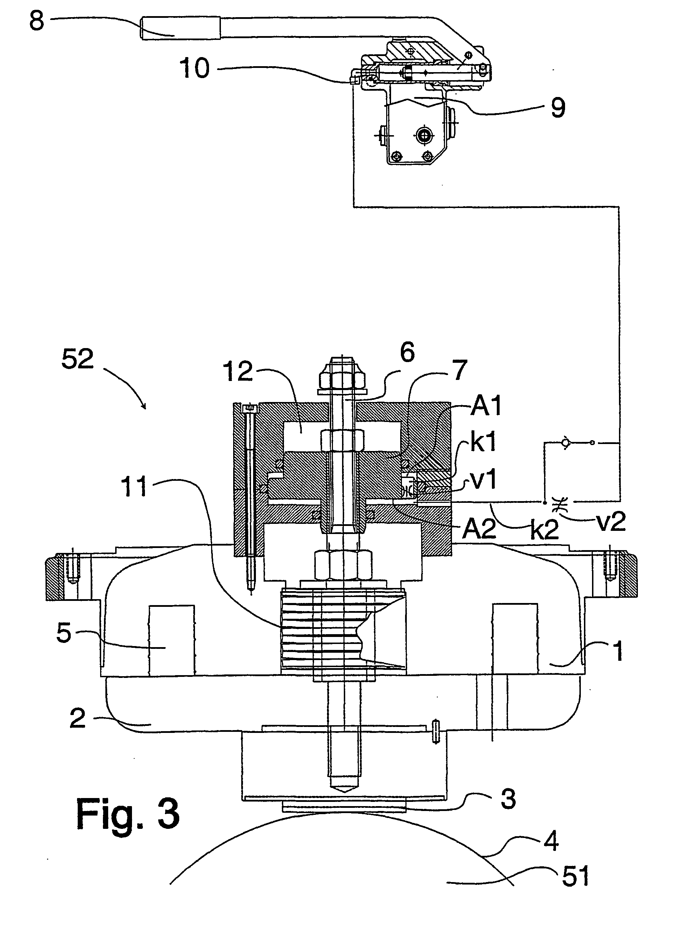

Fig. 3 presents the apparatus of the invention shown in Fig. 2 using a somewhat different implementation. Fig. 3 only differs from Fig. 2 in that the fluid circulation between the spaces partially defined by the upper and lower sides A1 and A2 of the piston has been implemented by drilling a duct k1 in the piston 7, the choker v1 damping the impact noise being placed in this duct. The apparatus according to Fig. 3 also has no tank circuit. Thus, the damping hydraulic circuit of the invention can be integrated with the piston 7 in the brake releasing cylinder 12 e.g. by drilling a hole in the piston 7. As a result, the fluid circulating between the upper and lower sides of the piston 7 would flow through this drilled hole. If the hole is small enough, it will constitute a good choker limiting the flow. It is also possible to place a separate choker in the drilled hole. Another possibility is to provide a fluid flow path at the side of the piston.

The invention can be implemented in conjunction with the brake in many ways without departing from the inventive idea. For instance, the duct k1 connecting the spaces partially defined by areas A1 and A2 as well as the choker v1 can be machined in the piston 7 and the pressure balancing duct together with the chokers v1 and v2 can be connected directly to one of the spaces partially defined by areas A1 and A2. The chokers used to restrict the flow may also be placed in a separate unit by the side of the brake releasing cylinder 12.

## Claims

1. Holding brake (52) for an elevator, comprising
- a brake body (1)
- a movable frame (2) movably supported on the brake body,
- a brake pad (3) attached to the movable frame,
- a compressing element (11) designed to move the movable frame away from the brake body and to press the brake pad attached to the movable frame against a braking surface (4),
- an electromagnet (5) mounted on the brake body to draw the movable frame toward the brake body as a first brake release device, and
- a hydraulic circuit resisting the motion of the movable frame (2),
**characterized in**
**that** the hydraulic circuit comprises a hydraulic actuator connected to the movable frame (2), and
**that** said actuator is designed to be operated by a second brake release device (8) connected to the hydraulic circuit for releasing the brake, e.g. during a power failure,.

2. Holding brake (52) as defined in claim 1, **characterized in that** it comprises a fluid path between the upper and lower sides, with a choker (v1) placed in said path.

3. Holding brake (52) as defined in claim 2, **characterized in that** the actuator is a brake releasing cylinder (12) containing a piston (7) for moving the movable frame (2), said piston having on its upper and lower sides unequal areas (A1, A2) meeting the fluid in the brake releasing cylinder (12).

4. Holding brake (52) as defined in claim 3, **characterized in that** the hydraulic circuit comprises a fluid container (9) and that there is a choker (v2) between the fluid container (9) and the piston.

5. Holding brake (52) as defined in any of the preceding claims, **characterized in that** the hydraulic circuit comprises a separate release device (8) provided with a container (9), from where, using a release pump (10), the fluid can be caused to flow to different sides of the piston (7)

6. Holding brake (52) as defined in any of the preceding claims, **characterized in that** the hydraulic circuit is a separate unit in connection with the holding brake (52)

7. Holding brake (52) as defined in any of preceding claims, **characterized in that** at least a part of the hydraulic circuit has been machined in the piston (7).

8. Holding brake (52) as defined in one of the preceding claims, **characterized in that** it comprises a tank circuit (13) integrated with the hydraulic circuit to eliminate leakages and wear of gaskets.

9. Use of the hydraulic circuit or part of the hydraulic circuit of a hydraulic device for releasing the holding brake (52) of a traction sheave elevator by means of a second brake release device (8), e.g. in case of power failure, in addition to a first electromagnetic brake release device (5) as well as brake damper to reduce the noise produced by the release and/or closing of a holding brake (52) of the type as defined in any of the preceding claims

10. Use as defined in claim 9, **characterized in that** the hydraulic circuit or a part of it is designed to provide a resistance to the motion of the brake.

## Patentansprüche

1. Haltebremse (52) für einen Aufzug, umfassend
- einen Bremskörper (1)
- einen beweglich an dem Bremskörper getragenen beweglichen Rahmen (2),
- einen an dem beweglichen Rahmen befestigten Bremsbelag (3),
- ein Druckelement (11), welches gestaltet ist, um den beweglichen Rahmen weg von dem Bremskörper zu bewegen und um den an dem beweglichen Rahmen befestigten Bremsbelag gegen eine Bremsoberfläche (4) zu pressen,
- einen an dem Bremskörper montierten Elektromagneten (5), um den beweglichen Rahmen zu dem Bremskörper zu ziehen, als eine erste Bremslösevorrichtung, und
- einen Hydraulikkreislauf, welcher der Bewegung des beweglichen Rahmens (2) entgegenwirkt,
**dadurch gekennzeichnet, dass**
der Hydraulikkreislauf ein Hydraulikstellmittel umfasst, welches mit dem beweglichen Rahmen (2) verbunden ist, und dass dieses Stellmittel ausgebildet ist, um durch eine zweite Bremslösevorrichtung (8) betrieben zu werden, welche mit dem Hydraulikkreislauf verbunden ist, um die Bremse, zum Beispiel während eines Stromausfalls, zu lösen.

2. Haltebremse (52) nach Anspruch 1,
**dadurch gekennzeichnet, dass** sie einen Fluidweg zwischen den oberen und unteren Seiten umfasst, wobei eine Drossel (v1) in diesem Weg angeordnet ist.

3. Haltebremse (52) nach Anspruch 2,
**dadurch gekennzeichnet, dass** das Stellmittel ein Bremslösezylinder (12) ist, welcher einen Kolben (7) enthält, um den beweglichen Rahmen (2) zu bewegen, welcher Kolben an seinen oberen und unteren Seiten ungleiche Flächen hat (A1, A2), welche in Kontakt mit dem Fluid in dem Bremslösezylinder (12) sind.

4. Haltebremse (52) nach Anspruch 3,
**dadurch gekennzeichnet, dass** der Hydraulikkreislauf einen Fluidcontainer (9) umfasst und dass eine Drossel (v2) zwischen dem Fluidcontainer (9) und dem Kolben angeordnet ist.

5. Haltebremse (52) nach einem der vorhergehenden Ansprüche,
**dadurch gekennzeichnet, dass** der Hydraulikkreislauf eine separate Lösevorrichtung (8) umfasst, welche mit einem Container (9) versehen ist, von wo, unter Verwendung einer Lösepumpe (10), das Fluid dazu gebracht werden kann, zu verschiedenen Seiten des Kolbens (7) zu fließen.

6. Haltebremse (52) nach einem der vorhergehenden Ansprüche,
**dadurch gekennzeichnet, dass** der Hydraulikkreislauf eine separate Einheit in Verbindung mit der Haltebremse (52) ist.

7. Haltebremse (52) nach einem der vorhergehenden Ansprüche,
**dadurch gekennzeichnet, dass** wenigstens ein Teil des Hydraulikkreislaufs in den Kolben (7) eingearbeitet ist.

8. Haltebremse (52) nach einem der vorhergehenden Ansprüche,
**dadurch gekennzeichnet, dass** sie einen Tankkreislauf (13) umfasst, welcher mit dem Hydraulikkreislauf integriert ist, um Leckagen und Abnutzung von Dichtungen zu vermeiden.

9. Verwendung des Hydraulikkreislaufs oder Teil des Hydraulikkreislaufs einer Hydraulikvorrichtung zur Lösung der Haltebremse (52) eines Treibscheibenaufzugs mittels einer zweiten Bremslösevorrichtung (8), zum Beispiel im Falle eines Stromausfalls, zusätzlich zu einer ersten elektromagnetischen Bremslösevorrichtung (5), als auch als Bremsdämpfer, um das Geräusch zu reduzieren, welches durch das Lösen und/oder Schließen einer Haltebremse (52) des Typs nach einem der vorhergehenden Ansprüche erzeugt wird.

10. Verwendung nach Anspruch 9,
**dadurch gekennzeichnet, dass** der Hydraulikkreislauf oder ein Teil davon ausgebildet ist, um einen Widerstand gegen die Bewegung der Bremse zu schaffen.

## Revendications

1. Frein d'arrêt (52) pour un ascenseur, comprenant:
- un corps de frein (1)
- un cadre (2) mobile supporté de façon mobile sur le corps de frein,
- une plaquette de freins (3) fixée au cadre mobile,
- un élément de compression (11) destiné à bouger le cadre mobile loin du corps de frein et à presser la plaquette de freins fixée au cadre mobile contre une surface de freinage (4),
- un électroaimant (5) monté sur le corps de frein pour tirer le cadre mobile vers le corps de frein en tant que premier dispositif de relâchement de frein, et
- un circuit hydraulique résistant au mouvement du cadre mobile (2),
**caractérisé en ce que** le circuit hydraulique comprend un actuateur hydraulique relié au cadre mobile (2), et
ledit actuateur étant destiné à être mis en fonction par un deuxième dispositif (8) de relâchement de frein, relié au circuit hydraulique pour relâcher le frein, par exemple pendant une panne de courant.

2. Frein d'arrêt (52) comme défini dans la revendication 1, **caractérisé en ce qu'**il comprend un chemin de fluide entre les côtés supérieurs et inférieurs, avec un orifice de contrôle (v1) placé dans ledit chemin.

3. Frein d'arrêt (52) comme défini dans la revendication 2, **caractérisé en ce que** l'actuateur est un cylindre (12) relâchant le frein contenant un piston (7) pour bouger le cadre (2) susceptible d'être bougé, ledit piston ayant sur ses côtés supérieurs et inférieurs, des zones inégales (A1, A2) rencontrant le fluide dans le cylindre (12) de relâchement du frein.

4. Frein d'arrêt (52) comme défini dans la revendication 3, **caractérisé en ce que** le circuit hydraulique comprend un conteneur de fluide 9 et **en ce qu'**il existe un orifice de contrôle (v2) entre le conteneur de fluide (9) et le piston.

5. Frein d'arrêt (52) comme défini dans n'importe laquelle des revendications précédentes, **caractérisé en ce que** le circuit hydraulique comprend un dispositif (8) de relâchement séparé pourvu d'un conteneur (9), à partir d'où le fluide peut être amené à circuler vers différents côtés du piston (7) si on utilise une pompe de vidange (10).

6. Frein d'arrêt (52) comme défini dans n'importe laquelle des revendications précédentes, **caractérisé en ce que** le circuit hydraulique est une unité séparée en liaison avec le frein d'arrêt (52).

7. Frein d'arrêt (52) comme défini dans n'importe laquelle des revendications précédentes, **caractérisé en ce qu'**au moins une partie du circuit hydraulique a été intégré par usinage dans le piston (7).

8. Frein d'arrêt (52) comme défini dans une des revendications précédentes, **caractérisé en ce qu'**il comprend un circuit de réservoir (13) intégré avec le circuit hydraulique pour éliminer les fuites et l'usure des joints .

9. L'utilisation du circuit hydraulique ou une partie du circuit hydraulique d'un dispositif hydraulique pour relâcher le frein d'arrêt (52) d'un ascenseur à poulie à traction au moyen d'un second dispositif (8) de relâchement de frein, par exemple, dans le cas d'une panne de courant, en plus d'un premier dispositif (5) de relâchement de frein électromagnétique ainsi qu'un amortisseur de frein destiné à réduire le bruit produit par le relâchement et / ou la fermeture d'un frein d'arrêt(52) du type défini dans n'importe laquelle des revendications précédentes.

10. L'utilisation comme définie dans la revendication 9, **caractérisé en ce que** le circuit hydraulique ou une partie de celui-ci est destiné à fournir une résistance au mouvement du frein.
